# EUROPEAN PATENT APPLICATION

(11) **EP 4 583 566 A1**
(43) Date of publication of application: **09.07.2025**
(21) Application number: 24219059.3
(22) Date of filing: 11.12.2024
(51) Int. Cl.: H04W 24/02, G06N 3/08

(54) **METHOD, APPARATUS AND COMPUTER PROGRAM**

(30) Priority: 08.01.2024 FI 20245007
(71) Applicant: Nokia Solutions and Networks Oy, 02610 Espoo (FI)
(72) Inventor: MOSTAFA, Salwa Said Hamed, Oulu (FI); ELBAMBY, Mohammed Saad, Espoo (FI); ABDELAZIZ, Mohamed, Espoo (FI); BENNIS, Mehdi, Oulu (FI)
(74) Representative: Nokia EPO representatives

(57) **Abstract**

There is provided a method performed by a mobile device, the method comprising: receiving, from an application running on the mobile device, an input defining an intent of the application, the intent being expressed using a first vocabulary set; generating, using a first neural network and based on the intent, a message for requesting a network slice selection for the application, the message being expressed using a second vocabulary set; sending the generated message to a network node; receiving, from the network node, information indicating a network slice selected for use by the application; determining whether the selected network slice satisfies the intent; and updating the first neural network based on the result of the determining.

## Description

### TECHNICAL FIELD

Various example embodiments of this disclosure relate to a method, apparatus, system and computer program and in particular but not exclusively to performing network slice selection for an application based on the application's intent.

### BACKGROUND

A communication network can be seen as a facility that enables communications between two or more communication devices or provides communication devices access to a data network. A mobile or wireless communication network is one example of a communication network. A communication device may be provided with a service by an application server.

Such communication networks operate in according with standards such as those provided by 3GPP (Third Generation Partnership Project) or ETSI (European Telecommunications Standards Institute). Examples of standards provided by 3GPP are the so-called 3GPP standards for cellular technology generations, such as 3GPP standards for 4G technology and 3GPP standards for 5G technology.

### SUMMARY

Some example embodiments of this disclosure will be described with respect to certain aspects. These aspects are not intended to indicate key or essential features of the embodiments of this disclosure, nor are they intended to be used to limit the scope of thereof. Other features, aspects, and elements will be readily apparent to a person skilled in the art in view of this disclosure.

According to an aspect, there is provided a mobile device comprising means for: receiving, from an application running on the mobile device, an input defining an intent of the application, the intent being expressed using a first vocabulary set; generating, using a first neural network and based on the intent, a message for requesting a network slice selection for the application, the message being expressed using a second vocabulary set; sending the generated message to a network node; receiving, from the network node, information indicating a network slice selected for use by the application; determining whether the selected network slice satisfies the intent; and updating the first neural network based on the result of the determining.

The first vocabulary set and second vocabulary set may be different.

The first vocabulary set may comprise one or more messages and/or words and/or symbols usable by the application to convey meaning.

The intent may comprise information defining at least one of: one or more requirements of the application; one or more goals of the application; or one or more constraints of the application.

The determining may comprise determining that the network slice selected for use by the application satisfies the intent, and updating the first neural network may comprise providing a positive reward to the first neural network model.

The determining may comprise determining that the network slice selected for use by the application does not satisfy the intent, and updating the first neural network may comprise providing a negative reward to the first neural network model.

The means may be further for sending, to the network node, information indicating whether the network slice selected for use by the application satisfies the intent.

The means may be further for: determining one of a plurality of network agents deployed at the network node based on a vocabulary set size of each of the plurality of network agents, wherein the message may be generated based on the vocabulary set size of the determined network agent and sending the generated message may comprise sending the generated message to the determined network agent.

Determining the one of the plurality of network agents may comprise: sending, to the network node, information indicating a required vocabulary size for the message; and receiving, from the network node, an indication of the one of the plurality of network agents.

According to an aspect there is provided a network node comprising means for: receiving, from a mobile device, a message for requesting a network slice selection for an application running on the mobile device, the message being based on an intent of the application and being expressed using a second vocabulary set; selecting, using a second neural network and based on the message, a network slice to assign to the application running on the mobile device; sending, to the mobile device, information indicating the selected network slice; determining whether the selected network slice satisfies the intent; and updating the second neural network based on the result of the determining.

The intent may comprise information defining at least one of: one or more requirements of the application; one or more goals of the application; or one or more constraints of the application.

The determining may comprise determining that the network slice selected for use by the application satisfies the intent, and updating the second neural network may comprise providing a positive reward to the first neural network model.

The determining may comprise determining that the network slice selected for use by the application does not satisfy the intent, and updating the second neural network may comprise providing a negative reward to the first neural network model.

The determining may comprise receiving, from the mobile device, information indicating whether the network slice selected for use by the application satisfies the intent.

The means may be further for: receiving, from the mobile device, information indicating a required vocabulary size for the message; determining one of a plurality of network agents deployed at the network node based on the information indicating the required vocabulary size and a vocabulary set size of each of the plurality of network agents; and sending, to the mobile device, an indication of the determined one of the plurality of network agents.

According to an aspect, there is provided a mobile device comprising at least one processor and at least one memory storing instructions that, when executed by the at least one processor, cause the mobile device at least to: receive, from an application running on the mobile device, an input defining an intent of the application, the intent being expressed using a first vocabulary set; generate, using a first neural network and based on the intent, a message for requesting a network slice selection for the application, the message being expressed using a second vocabulary set; send the generated message to a network node; receive, from the network node, information indicating a network slice selected for use by the application; determine whether the selected network slice satisfies the intent; and update the first neural network based on the result of the determining.

The first vocabulary set and second vocabulary set may be different.

The first vocabulary set may comprise one or more messages and/or words and/or symbols usable by the application to convey meaning.

The intent may comprise information defining at least one of: one or more requirements of the application; one or more goals of the application; or one or more constraints of the application.

The mobile device may be further caused to determine that the network slice selected for use by the application satisfies the intent, and provide a positive reward to the first neural network model.

The mobile device may be further caused to determine that the network slice selected for use by the application does not satisfy the intent, and provide a negative reward to the first neural network model.

The mobile device may be further caused to send, to the network node, information indicating whether the network slice selected for use by the application satisfies the intent.

The mobile device may be further caused to: determine one of a plurality of network agents deployed at the network node based on a vocabulary set size of each of the plurality of network agents, wherein the mobile device may generate the message based on the vocabulary set size of the determined network agent and send the generated message to the determined network agent.

The mobile device may be further caused to: send, to the network node, information indicating a required vocabulary size for the message; and receive, from the network node, an indication of the one of the plurality of network agents.

According to an aspect, there is provided a network node comprising at least one processor and at least one memory storing instructions that, when executed by the at least one processor, cause the network node at least to: receive, from a mobile device, a message for requesting a network slice selection for an application running on the mobile device, the message being based on an intent of the application and being expressed using a second vocabulary set; select, using a second neural network and based on the message, a network slice to assign to the application running on the mobile device; send, to the mobile device, information indicating the selected network slice; determine whether the selected network slice satisfies the intent; and update the second neural network based on the result of the determining.

The intent may comprise information defining at least one of: one or more requirements of the application; one or more goals of the application; or one or more constraints of the application.

The network node may be further caused to determine that the network slice selected for use by the application satisfies the intent, and provide a positive reward to the first neural network model.

The network node may be further caused to determine that the network slice selected for use by the application does not satisfy the intent, and provide a negative reward to the first neural network model.

The network node may be further caused to receive, from the mobile device, information indicating whether the network slice selected for use by the application satisfies the intent.

The network node may be further caused to: receive, from the mobile device, information indicating a required vocabulary size for the message; determine one of a plurality of network agents deployed at the network node based on the information indicating the required vocabulary size and a vocabulary set size of each of the plurality of network agents; and send, to the mobile device, an indication of the determined one of the plurality of network agents.

According to an aspect, there is provided a method performed by a mobile device, the method comprising: receiving, from an application running on the mobile device, an input defining an intent of the application, the intent being expressed using a first vocabulary set; generating, using a first neural network and based on the intent, a message for requesting a network slice selection for the application, the message being expressed using a second vocabulary set; sending the generated message to a network node; receiving, from the network node, information indicating a network slice selected for use by the application; determining whether the selected network slice satisfies the intent; and updating the first neural network based on the result of the determining.

The first vocabulary set and second vocabulary set may be different.

The first vocabulary set may comprise one or more messages and/or words and/or symbols usable by the application to convey meaning.

The intent may comprise information defining at least one of: one or more requirements of the application; one or more goals of the application; or one or more constraints of the application.

The determining may comprise determining that the network slice selected for use by the application satisfies the intent, and updating the first neural network may comprise providing a positive reward to the first neural network model.

The determining may comprise determining that the network slice selected for use by the application does not satisfy the intent, and updating the first neural network may comprise providing a negative reward to the first neural network model.

The method may further comprise sending, to the network node, information indicating whether the network slice selected for use by the application satisfies the intent.

The method may further comprise: determining one of a plurality of network agents deployed at the network node based on a vocabulary set size of each of the plurality of network agents, wherein the message may be generated based on the vocabulary set size of the determined network agent and sending the generated message may comprise sending the generated message to the determined network agent.

Determining the one of the plurality of network agents may comprise: sending, to the network node, information indicating a required vocabulary size for the message; and receiving, from the network node, an indication of the one of the plurality of network agents.

According to an aspect there is provided a method performed by a network node, the method comprising: receiving, from a mobile device, a message for requesting a network slice selection for an application running on the mobile device, the message being based on an intent of the application and being expressed using a second vocabulary set; selecting, using a second neural network and based on the message, a network slice to assign to the application running on the mobile device; sending, to the mobile device, information indicating the selected network slice; determining whether the selected network slice satisfies the intent; and updating the second neural network based on the result of the determining.

The intent may comprise information defining at least one of: one or more requirements of the application; one or more goals of the application; or one or more constraints of the application.

The determining may comprise determining that the network slice selected for use by the application satisfies the intent, and updating the second neural network may comprise providing a positive reward to the first neural network model.

The determining may comprise determining that the network slice selected for use by the application does not satisfy the intent, and updating the second neural network may comprise providing a negative reward to the first neural network model.

The determining may comprise receiving, from the mobile device, information indicating whether the network slice selected for use by the application satisfies the intent.

The method may further comprise: receiving, from the mobile device, information indicating a required vocabulary size for the message; determining one of a plurality of network agents deployed at the network node based on the information indicating the required vocabulary size and a vocabulary set size of each of the plurality of network agents; and sending, to the mobile device, an indication of the determined one of the plurality of network agents.

According to an aspect, there is provided a computer readable medium comprising instructions which, when executed by a mobile device, cause the mobile device to perform at least the following: receiving, from an application running on the mobile device, an input defining an intent of the application, the intent being expressed using a first vocabulary set; generating, using a first neural network and based on the intent, a message for requesting a network slice selection for the application, the message being expressed using a second vocabulary set; sending the generated message to a network node; receiving, from the network node, information indicating a network slice selected for use by the application; determining whether the selected network slice satisfies the intent; and updating the first neural network based on the result of the determining.

The first vocabulary set and second vocabulary set may be different.

The first vocabulary set may comprise one or more messages and/or words and/or symbols usable by the application to convey meaning.

The intent may comprise information defining at least one of: one or more requirements of the application; one or more goals of the application; or one or more constraints of the application.

The determining may comprise determining that the network slice selected for use by the application satisfies the intent, and updating the first neural network may comprise providing a positive reward to the first neural network model.

The determining may comprise determining that the network slice selected for use by the application does not satisfy the intent, and updating the first neural network may comprise providing a negative reward to the first neural network model.

The instructions, when executed by the mobile device, may cause the mobile device to further perform: sending, to the network node, information indicating whether the network slice selected for use by the application satisfies the intent.

The instructions, when executed by the mobile device, may cause the mobile device to further perform: determining one of a plurality of network agents deployed at the network node based on a vocabulary set size of each of the plurality of network agents, wherein the message may be generated based on the vocabulary set size of the determined network agent and sending the generated message may comprise sending the generated message to the determined network agent.

Determining the one of the plurality of network agents may comprise: sending, to the network node, information indicating a required vocabulary size for the message; and receiving, from the network node, an indication of the one of the plurality of network agents.

According to an aspect, there is provided a computer readable medium comprising instructions which, when executed by a network node, cause the network node to perform at least the following: receiving, from a mobile device, a message for requesting a network slice selection for an application running on the mobile device, the message being based on an intent of the application and being expressed using a second vocabulary set; selecting, using a second neural network and based on the message, a network slice to assign to the application running on the mobile device; sending, to the mobile device, information indicating the selected network slice; determining whether the selected network slice satisfies the intent; and updating the second neural network based on the result of the determining.

The intent may comprise information defining at least one of: one or more requirements of the application; one or more goals of the application; or one or more constraints of the application.

The determining may comprise determining that the network slice selected for use by the application satisfies the intent, and updating the second neural network may comprise providing a positive reward to the first neural network model.

The determining may comprise determining that the network slice selected for use by the application does not satisfy the intent, and updating the second neural network may comprise providing a negative reward to the first neural network model.

The determining may comprise receiving, from the mobile device, information indicating whether the network slice selected for use by the application satisfies the intent.

The instructions, when executed by the network node, may cause the network node to further perform: receiving, from the mobile device, information indicating a required vocabulary size for the message; determining one of a plurality of network agents deployed at the network node based on the information indicating the required vocabulary size and a vocabulary set size of each of the plurality of network agents; and sending, to the mobile device, an indication of the determined one of the plurality of network agents.

According to an aspect, there is provided a non-transitory computer readable medium comprising program instructions that, when executed by an apparatus, cause the apparatus to perform at least the method according to any of the preceding aspects.

In the above, many different embodiments have been described. It should be appreciated that further embodiments may be provided by the combination of any two or more of the embodiments described above.

### DESCRIPTION OF FIGURES

Some example embodiments will now be described, by way of non-limiting and illustrative example only, with reference to the accompanying Figures in which:
FIG. 1 shows a representation of a 5^{th} generation communication system;
FIG. 2 shows a representation of an apparatus for the communication system of FIG. 1 according to some example embodiments;
FIG. 3 shows a representation of an apparatus according to some example embodiments;
FIG. 4 shows a method according to some examples;
FIG. 5 shows methods according to some examples;
FIG. 6 shows a method according to some examples;
FIG. 7 shows the results of a simulation implementing the method of some examples; and
FIG. 8 shows a schematic representation of an apparatus according to some examples.

### DETAILED DESCRIPTION

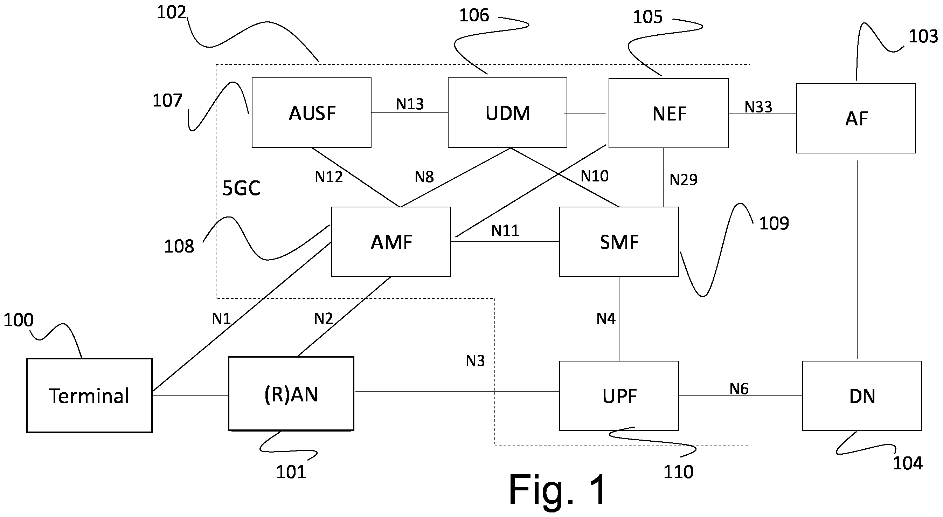

In the following various example embodiments are explained with reference to communication devices capable of communication with a communication system. Before explaining in detail the embodiments of the methods and apparatuses of the present disclosure, a 5^{th} generation communication system (5GS), an access network and a core network (5GC) thereof, and communication devices are briefly explained with reference to FIG. 1, 2 and 3.

FIG. 1 shows a schematic representation of a 5G communication system (5GS). The 5GS may comprise a user equipment (UE) or Terminal 100, an access network such as a 5G radio access network (5G-RAN) 101 or next generation radio access network (NG-RAN), a 5G core network 102, and one or more application functions 103. An application function 103 may be deployed in the 5GS as trusted application function or may be deployed or host on one or more application servers of the data network (DN) 104. Such application functions are untrusted application functions. The 5GS connects the UE to a data network the access network and the 5GC 102 (e.g., a UPF of the 5GC).

The 5G-RAN 101 may comprise one or more radio access nodes, such as gNodeB (gNB). A gNB may include one or more gNodeB (GNB) distributed units connected to one or more gNodeB (GNB) centralized units.

The 5GC may comprise the following network functions: Network Slice Selection Function (NSSF); Network Exposure Function (NEF) 105; Network Repository Function (NRF); Policy Control Function (PCF); Unified Data Management (UDM) 106; Application Function (AF) 103; Authentication Server Function (AUSF) 107; an Access and Mobility Management Function (AMF) 108; Session Management Function (SMF) 109; and a user plane function (UPF) 110. FIG. 1 also shows the various interfaces (N1, N2 etc.) that may be implemented between the various elements of the system.

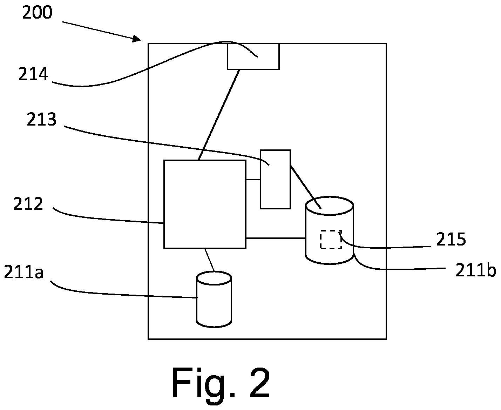

FIG. 2 illustrates an example of a control apparatus 200 for controlling a function of the access network (e.g., a 5G-RAN or the NG-RAN illustrated in FIG. 1) illustrated on FIG. 1. The control apparatus 200 may comprise at least one random access memory (RAM) 211a, at least one read only memory (ROM) 211b, at least one processor 212, 213 and a network interface 214. The at least one processor 212, 213 may be coupled to the RAM 211a and the ROM 211b. The at least one processor 212, 213 may be configured to execute an appropriate software code 215. Execution of the software code 215 may for example cause the apparatus to perform operations for controlling a function of the access network. The software code 215 may be stored in the ROM 211b. The control apparatus 200 may be interconnected with another control apparatus 200 for controlling another function of the 5G-RAN or the NG-RAN. In some embodiments, each function of the 5G-RAN or the NG-RAN is deployed or hosted on a control apparatus 200. In alternative embodiments, two or more functions of the 5G-RAN or the NG-RAN may share a control apparatus.

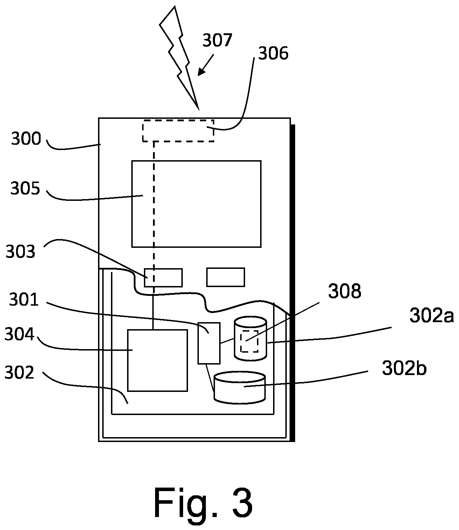

FIG. 3 illustrates an example of a communication device 300, such as the UE illustrated on FIG. 1. The communication device 300 may be provided by any device capable of sending and receiving radio signals. Non-limiting examples of a communication device 300 comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The communication device 300 may comprise a transceiver for transmitting and/or receiving, for example, wireless signals carrying communications, for example radio signals. The communications may be one or more of voice, electronic mail (email), text messages, multimedia data, machine data and so on.

The communication device 300 may receive wireless signals (e.g., radio signals) over an air or radio interface 307 via appropriate apparatus for receiving and may transmit wireless signals via appropriate apparatus for transmitting radio signals. In FIG. 3 transceiver is designated schematically by block 306. The transceiver 306 may comprise, for example, a radio part and associated antenna arrangement. The antenna arrangement may be arranged internally or externally to the mobile device and may comprise one or more antenna elements. The antenna arrangement may be a multi-input multi output (MIMO) antenna.

The communication device 300 may be provided with at least one processor 301, at least one memory ROM 302a, at least one RAM 302b and other possible components 303 for use in software and hardware aided execution of tasks it is designed to perform, including control of access to and communications with access networks (e.g., the 5G-RAN or NG-RAN illustrated in FIG. 1) and other communication devices. The at least one processor 301 is coupled to the RAM 302b and the ROM 302a. The at least one processor 301 may be configured to execute an appropriate software code 308. The software code 308 may for example allow to perform one or more operations of the communication device. The software code 308 may be stored in the ROM 302a.

The processor, the ROM, and the RAM, the transceiver and other circuitry of the communication device (e.g., a modem) can be provided on a circuit board, in chipsets, or in a system on chip. The circuit board, chipsets or system on chip is denoted by reference 304. The communication device 300 may optionally have a user interface such as keypad 305, touch sensitive screen or pad, combinations thereof or the like. Optionally one or more of a display, a speaker and a microphone may be provided depending on the type of communication device.

Some communications networks, such as fifth generation (5G) and sixth generation (6G) networks, can provide digital services to mobile devices. There are many different examples of such services from different sectors such as smart manufacturing and Media & Entertainment (M&E). The digital services may be end-to-end (E2E) services that span multiple network domains, e.g., access domain, transport domain, and core network domain, as well as other domains (e.g., edge, cloud) according to the specific network implementation. As an example from an Internet-of-Things (IoT) use case, a digital service can be to provide connectivity and/or edge computing services to a massive number of connected loT devices requiring pre-defined service quality levels.

Some digital services may be provided with guaranteed quality-of-service (QoS) levels through service-level agreements (SLAs). For example, digital services such as network slices may be defined based on requested SLA metrics, e.g., minimum data rate or maximum allowable latency. Network slices can be offered in the form of catalog-based or intent-based slices.

In catalog-based slicing, a digital service user may select the best network slice profile that fits the digital service user's needs from a catalog of possible slices, each with pre-defined pricing and SLA. In intent-based methods, a digital service user may express its needs as an intent, which may define the user's needs in terms of high-level service goals, e.g., minimum guaranteed bitrate, minimum number of connected loT devices, or maximum allowable latency. Accordingly, a network slice can be instantiated from slice templates selected either based on the user's catalog selection or according to the user's intents.

Flexibility in digital service provision may thus be enabled through the use of intent-based Networking (IBN), in which the service user expresses service needs in terms of intents.

Intents may comprise one or more service requirements, such as quality of service (QoS) or quality of experience (QoE) requirements, expressed at a general or high level. IBN aims to facilitate consuming network services by different types of applications by simplifying the process of describing a network service. IBN methods may allow service customers (e.g., users or applications) to express their service requirements in high-level intents, and a network management entity translates this intent into a corresponding network capability offering, e.g., through a network slice selection.

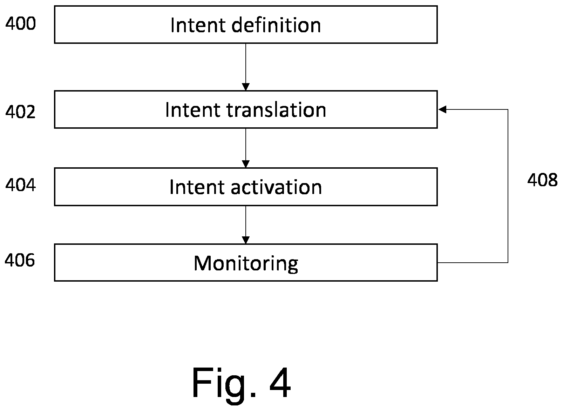

FIG. 4 shows an example illustrating various stages of IBN. At 400, the service consumer defines the service intent policy. An intent policy is a set of service requirements, expressed in high-level domain-agnostic declarative language. At 402, a service management entity, e.g., an E2E management and orchestration entity, then translates the intents into domain-specific resource assignments for the service. At 404 the service is then activated and at 406 the performance is monitored to assure that the requirements in the SLA are met. Feedback may be provided at 408 based on the monitoring stage 406 to improve the intent translation performed at 402.

However, existing IBN methods that allow for intent formats that are described in network language may not necessarily describe the requirements of the vast number of applications consuming digital services. For example, an application may not have prior knowledge of the specific network language, or the network language may be more limited than needed for the application to describe the application's intent, and so the application may not be able to properly express the application's intent to the network.

Enabling service consumers (e.g., applications or their users) to express their needs in their domain language may be complex because networks may need to be preconfigured with how to understand these domain languages, which may be difficult to implement and scale to accommodate large numbers of different applications. Another option is to limit intents to limited lists of generic intents that the network can understand. However, this limits the potential of future networks' ability to support the variety of applications each having their own needs/goals.

Some examples of the present disclosure provide methods and apparatuses to address the abovementioned problems. In some examples a communication protocol that maps an application's intent to a corresponding network capability offering may be determined without a pre-designed or pre-existing communication protocol between the application and the network. In some examples, the application and the network may train respective agents to determine an emergent communication protocol and map the intent to the most suitable network offering (e.g., a network slice selection) accordingly.

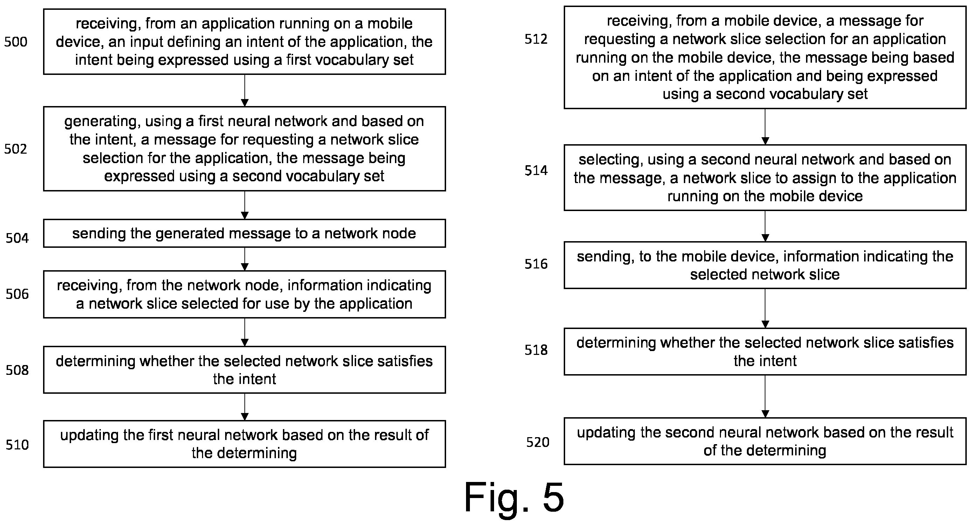

Reference is made to FIG. 5, which shows methods according to some examples.

At 500, a method comprises receiving, from an application running on a mobile device, an input defining an intent of the application, the intent being expressed using a first vocabulary set. At 502 the method comprises generating, using a first neural network and based on the intent, a message for requesting a network slice selection for the application, the message being expressed using a second vocabulary set. At 504 the method comprises sending the generated message to a network node. At 506 the method comprises receiving, from the network node, information indicating a network slice selected for use by the application. At 508 the method comprises determining whether the selected network slice satisfies the intent. At 510 the method comprises updating the first neural network based on the result of the determining.

In some examples the method of steps 500-510 may be performed by a mobile device.

At 512, a method comprises receiving, from a mobile device, a message for requesting a network slice selection for an application running on the mobile device, the message being based on an intent of the application and being expressed using a second vocabulary set. At 514 the method comprises selecting, using a second neural network and based on the message, a network slice to assign to the application running on the mobile device. At 516 the method comprises sending, to the mobile device, information indicating the selected network slice. At 518 the method comprises determining whether the selected network slice satisfies the intent. At 520 the method comprises updating the second neural network based on the result of the determining.

In some examples, an application may be running on a mobile device or an application server (which may be external to the mobile device, for example in a fixed server or location) may be providing an application remotely via supporting an application client running on the mobile device. The mobile device may be any device capable of running the application or application client, such as a user equipment, robot, etc.

The mobile device may also be running an application agent. The application agent may for example be an emergent communication (EC) agent. The application agent may be implemented as a reinforcement learning agent that utilises a deep neural network to develop an emergent communication protocol for mapping an application intent to a communication message for expressing the application intent to the network.

In some examples, the network may comprise a network agent. Where the network agent is deployed may be implementation specific - for example the network agent may be deployed as part of the core network or may be deployed elsewhere in the network. The network agent may be implemented as a reinforcement learning agent that uses a deep neural network to interpret the application intent comprised in the communication message received from the application agent and map the application intent to a network service, for example a particular network slice.

As used herein, an intent (or application intent) is to be understood as information defining the requirements, goals and/or constraints for an application. The intent may thus comprise information defining what needs to be achieved for the application, but not necessarily defining how it is achieved. For example, the intent may define that the service requested by the application has high reliability, and it is up to the network to determine how to provide the requested service (which for example may be by providing a service designed for ultra reliable low latency communications).

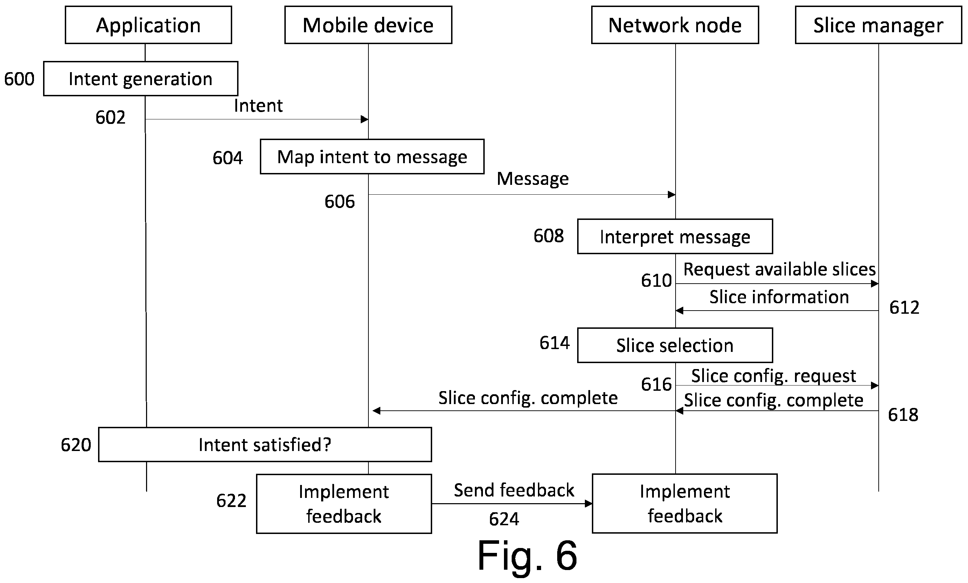

Reference is made to FIG. 6, which shows a method according to some examples.

At 600, an application running on a mobile device (or application running on an application server) generates an intent. The intent may comprise information defining the requirements, goals and/or constraints for an application. The intent may be expressed using a first vocabulary set. The first vocabulary set may be understood as being a vocabulary set known to the application, and may comprise messages, words, symbols, etc. usable by the application to convey meaning.

At 602, the mobile device (e.g. an application agent running on the mobile device) receives the intent from the application.

At 604, the mobile device (e.g. an application agent running on the mobile device) utilizes a first deep neural network to map the intent received from the application to a message for sending to a network node. The information comprised in the message may be expressed in a second vocabulary set different to the first vocabulary set. The second vocabulary may comprise messages, words, symbols etc that are at least in part different to the message, words, symbols etc. comprised in the first vocabulary set. For example, the mobile device may map the intent expressed in the first vocabulary set to a message comprising information expressed in a second vocabulary set.

At 606, the mobile device (e.g. an application agent running on the mobile device) may send the generated message to a network node (e.g. a network agent running on the network node). The mobile device may in some examples store the sent message for later use during feedback training.

At 608, the network node (e.g. a network agent running on the network node) interprets the received message and determines one or more actions to perform. For example, as shown in FIG. 6 the network node (e.g. a network agent running on the network node) may select a network slice based on the message. In other words, in some examples the network node (e.g. a network agent running on the network node) may receive the message comprising information expressed in the second vocabulary set and perform network slice selection based on the received information. In some examples, the network node (e.g. a network agent running on the network node) may implement a reinforcement learning agent that uses a second deep neural network to determine what action to perform (e.g., network slice selection) and how to perform it (e.g., the parameters of the network slice needed by the requesting application) based on the received message.

For example, when the received message requires a network slice selection, as shown in 610 the network node (e.g. a network agent running on the network node) may determine the available network slices by sending a request to a network slice manager and receiving a response at 612. Then at 614 the network node (e.g. a network agent running on the network node) may select a network slice from among the available network slices based on the received message. At 616 the network node (e.g. a network agent running on the network node) may send a request to the network slice manager to configure the selected network slice for the application. At 618 the network slice manager may send an indication to the network node (e.g. a network agent running on the network node) to indicate that the selected network slice is configured for the application. The network node may then inform the mobile device of the configured network slice.

At 620 the mobile device (e.g. an application agent running on the mobile device) may determine whether the intent of the application has been satisfied. For example the mobile device may monitor one or more parameters (key performance indicators) associated with the application to determine whether the intent has been satisfied. For example the mobile device (e.g. an application agent running on the mobile device) may monitor parameters such as the quality of service (QoS), quality of experience (QoE), or quality of application (QoA) etc.

At 622, the mobile device (e.g. an application agent running on the mobile device) may input the parameters (e.g., QoS, QoE, QoA etc.) monitored at 620 as feedback into the first deep neural network for training the first deep neural network. At 624 the mobile device (e.g. an application agent running on the mobile device) may provide the parameters to the network node (e.g. a network agent running on the network node) as input parameters for feedback into the second deep neural network.

In some examples the mobile device and network node may store the monitored parameters and after a certain period of time has elapsed or a certain number of operations have been performed, provide the parameters for feedback into the respective deep neural networks.

Thus in some examples the first deep neural network and second deep neural network may be trained based on the parameters associated with the application that arise based on the decisions made by the first neural network (in terms of interpreting the intent of the application and expressing that intent in a second vocabulary set) and the second neural network (in terms of performing network actions, such as network slice selection, based on the received information).

For example, if the outcome of the slice selection was that a network slice was assigned that did not meet the QoS requirements of the application, then the interpretation and expression of the intent by the mobile device, and/or the implementing of the network action by the network node, was incorrect. Likewise, if the outcome of the slice selection was that a network slice was assigned that did meet the QoS requirements of the application, then the interpretation and expression of the intent by the mobile device, and the implementing of the network action by the network node, was correct.

This information can be provided as feedback for the neural networks to learn from the decisions made and converge towards a communication protocol (e.g., an agreed understanding of the second vocabulary set) that allows an application to properly express its intent to the network without prior agreement on the communication protocol. The second vocabulary set may not be understood by the network node initially. However, through one or more iterations of the methods described herein, the mobile device and the network node may determine a common understanding or interpretation of the second vocabulary set. For example, the mobile device and network node may, through the one or more iterations, determine that a message comprising bits set to "00010" indicates a request for a network slice assignment with a particular latency requirement.

In some examples there may be multiple network agents available at the network node. Each network agent may have a different vocabulary set size - for example a first network agent may have a first vocabulary set size of 5 symbols, and a second network agent may have a second vocabulary set size of 7 symbols. By the second network agent having a larger vocabulary set size than the first network agent, the mobile device may be able to express an application's intent to the second network agent with finer granularity as compared to the first network agent.

In some examples, prior to mapping the intent to the message at step 604, the mobile device may select one of the available network agents and perform the mapping at 604 according to the vocabulary set size of the selected network agent. For example, the mobile device may determine a vocabulary set size needed to express the application's intent and determine the network agent according to the needed vocabulary set size (e.g., the network node may fetch the network agent according to the needed vocabulary set size and inform the mobile device accordingly).

In some examples a mobile device/user/application may be limited to only certain network agents unless the mobile device/user/application has a certain subscription level that allows access to further network agents with higher vocabulary set sizes.

To illustrate some of the concepts described above, an illustrative example scenario is now described.

In this scenario, two different application types are running on five different mobile devices in communication with a single base station in a smart factory.

The first application type running on the mobile devices supports a robot camera that captures the front view path of the robot and detects objects. The first application type requires a variable but typically high data rate and CPU resources with non-strict reliability to analyse the captured scenes and send information to a centralized base station. The second application type running on the mobile devices supports a robot controller that sends control information to the robot to move. The second application type requires low data rates and CPU resources, which can be variable but typically with ultra-high reliability.

The base station can offer ten different network slices supporting services with specific QoS levels. Five slices support high data rate and computing resources with low reliability while the other five slices support low data rate and computing resources with ultra-high reliability.

At each time slot, an instance of an application with a particular QoS requirement is generated at each mobile device, in which the mobile device needs to communicate with the base station at a high level (e.g., without specifying the exact QoS) to request to the suitable network slice that can support its application. The mobile devices do not have a pre-defined protocol to communicate with the base station. Instead, they may use ten messages with no pre-defined meaning to express their intent for the generated application instances.

A multi-agent proximal policy optimization (MAPPO) algorithm was adopted to simulate the application of the example methods to the scenario. Each agent adopted the actor-critic algorithm along with the generalized advantage estimation (GAE). The actor-critic network architecture was constructed, where the policies and the value function(s) are distinct and consist of a four-layer D2RL (deep dense architectures in reinforcement learning). The D2RL relies on using deeper MLP layers along with dense connections, where the original input features (i.e. state or state-action pairs) are passed to each hidden layer concatenated with the previous hidden layer output except the last hidden layer since it is a direct linear transformation. This structure avoids decreasing the mutual information between the input and output due to the non-linear transformations used in deep learning which is called data processing inequality (DPI). The D2RL was considered here since it achieves superior performance and sample efficiency compared to the other two-layer MLPs network architecture.

To update the weights of the neural networks, each network keeps track of a fixed-length trajectory of memories (i.e., states, actions, rewards). Then, each neural network is optimized using an Adam optimizer, where updates are done using stochastic gradient ascent via mini-batches, where 4 epochs of updates are done on each mini-batch.

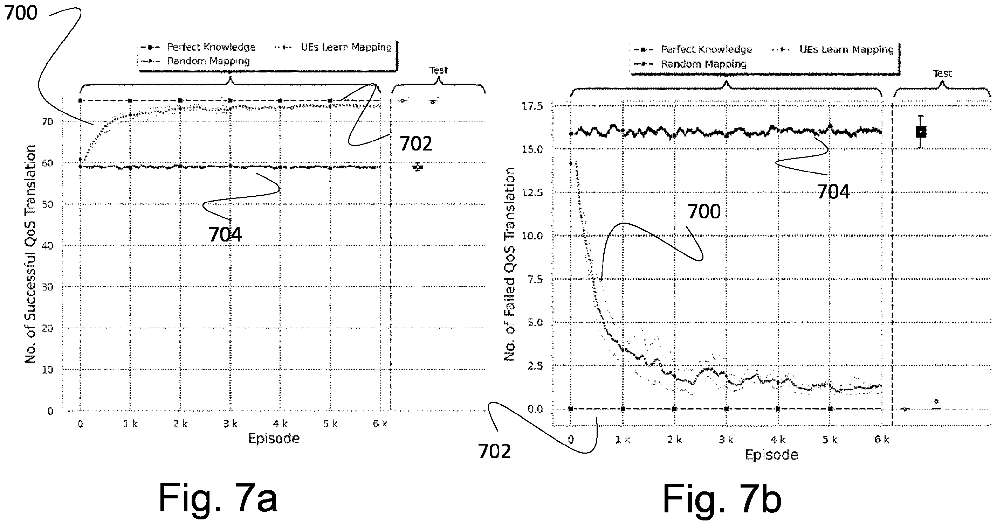

The simulated performance of the neural networks is shown in FIG. 7 and evaluated over the training process, where the solid lines 700 represent the average performance in the evaluation episodes during the training and the shaded regions show the 95 % confidence interval (CI). Detailed simulation parameters are listed in Table 1 below.

**Table 1: MAPPO Hyperparameters**

| **Hyperparameter** | **Values** | **Hyperparameter** | **Values** |
|---|---|---|---|
| No. of episodes | 6000 | Learning rate | 10⁻² |
| Minibatch size | 64 | Discount factor | 0.99 |
| GAE parameter | 0.95 | Clipping parameter | 0.2 |
| VF coeff.(c1) | 0.2 | Entropy coeff.(c2) | 0.2 |

The performance of the above-described method in comparison to two baselines (perfect knowledge and random mapping) is illustrated in FIG. 7. In the case of the perfect knowledge baseline 702 it is assumed that the base station has perfect knowledge about the required QoS of the mobile devices and maps to the corresponding slices that guarantee that QoS. In the case of the random sampling baseline 704 the base station randomly maps the mobile devices to network slices without determining whether the QoS requirements will be met.

As can be seen from the simulation results shown in FIG. 7, by implementing the above-described method the mobile devices can learn an efficient policy to communicate their intent with the base station and converge to a performance close to the scheme with perfect knowledge. FIG. 7a shows that mobile devices can successfully translate the required QoS to the base station to do the mapping to the correct network-configured slice, while FIG. 7b demonstrates that the number of failed QoS translations decreases through training and reaches close to zero after training.

The example methods described herein provide a simple and efficient method for different applications to interact with the network and express their intent, without requiring complicated and high computational models. Moreover, the example methods can support different applications and different application vocabulary sets. The example methods may be used by any application requiring special requirements from networks, such as in a smart factory environment or other applications. Some examples may allow applications to come up with a language protocol to communicate their needs to the network and the network to select the right network slice that satisfies the application's needs. The simulation results show that the invention can learn from multiple applications and know how to map a symbol to the right slice that satisfies its QoS levels.

In some examples there is provided a mobile device comprising means for: receiving, from an application running on the mobile device, an input defining an intent of the application, the intent being expressed using a first vocabulary set; generating, using a first neural network and based on the intent, a message for requesting a network slice selection for the application, the message being expressed using a second vocabulary set; sending the generated message to a network node; receiving, from the network node, information indicating a network slice selected for use by the application; determining whether the selected network slice satisfies the intent; and updating the first neural network based on the result of the determining.

In some examples there is provided a mobile device comprising at least one processor and at least one memory storing instructions that, when executed by the at least one processor, cause the mobile device at least to: receive, from an application running on the mobile device, an input defining an intent of the application, the intent being expressed using a first vocabulary set; generate, using a first neural network and based on the intent, a message for requesting a network slice selection for the application, the message being expressed using a second vocabulary set; send the generated message to a network node; receive, from the network node, information indicating a network slice selected for use by the application; determine whether the selected network slice satisfies the intent; and update the first neural network based on the result of the determining.

In some examples there is provided a network node comprising at least one processor and at least one memory storing instructions that, when executed by the at least one processor, cause the network node at least to: receive, from a mobile device, a message for requesting a network slice selection for an application running on the mobile device, the message being based on an intent of the application and being expressed using a second vocabulary set; select, using a second neural network and based on the message, a network slice to assign to the application running on the mobile device; send, to the mobile device, information indicating the selected network slice; determine whether the selected network slice satisfies the intent; and update the second neural network based on the result of the determining.

In some examples there is provided a network node comprising means for: receiving, from a mobile device, a message for requesting a network slice selection for an application running on the mobile device, the message being based on an intent of the application and being expressed using a second vocabulary set; selecting, using a second neural network and based on the message, a network slice to assign to the application running on the mobile device; sending, to the mobile device, information indicating the selected network slice; determining whether the selected network slice satisfies the intent; and updating the second neural network based on the result of the determining.

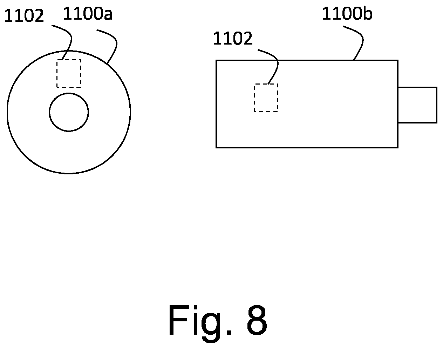

FIG. 8 shows a schematic representation of non-volatile memory media 1100a (e.g., computer disc (CD) or digital versatile disc (DVD)) and 1100b (e.g. universal serial bus (USB) memory stick) storing instructions and/or parameters 1102 which when executed by a processor allow the processor to perform one or more of the steps of the method of FIG. 6.

It is understood that references in the above to various network functions (e.g., to an AMF, an SMF, TNF etc.) may comprise apparatus that perform at least some of the functionality associated with those network functions. Further, an apparatus comprising a network function may comprise a virtual network function instance of that network function.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used herein, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the FIG.s may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal ) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Various example embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various example embodiments of the disclosure is set out by the independent claims. The example embodiments and features thereof, if any, described in this disclosure that do not fall under the scope of the independent claims are to be interpreted as examples useful for understanding various example embodiments of the disclosure.

The foregoing description has provided, by way of non-limiting and illustrative examples, a full and informative description of the various example embodiments of this disclosure. However, various modifications and adaptations may become apparent to those skilled in the relevant arts in view of the foregoing description, when read in conjunction with the accompanying drawings and the claims. However, all such and similar modifications of the teachings will still fall within the various example embodiments of the disclosure as set forth in the claims. By way of non-limiting and illustrative example, there is a further example embodiment comprising a combination of one or more example embodiments with any of the other example embodiments previously discussed.

## Claims

1. A method performed by a mobile device, the method comprising:
receiving, from an application running on the mobile device, an input defining an intent of the application, the intent being expressed using a first vocabulary set;
generating, using a first neural network and based on the intent, a message for requesting a network slice selection for the application, the message being expressed using a second vocabulary set;
sending the generated message to a network node;
receiving, from the network node, information indicating a network slice selected for use by the application;
determining whether the selected network slice satisfies the intent; and
updating the first neural network based on the result of the determining.

2. The method of claim 1, wherein the first vocabulary set and second vocabulary set are different.

3. The method of claim 1 or 2, wherein the first vocabulary set comprises one or more messages and/or words and/or symbols usable by the application to convey meaning.

4. The method of any preceding claim, wherein the intent comprises information defining at least one of:
one or more requirements of the application;
one or more goals of the application; or
one or more constraints of the application.

5. The method of any preceding claim, wherein:
the determining comprises determining that the network slice selected for use by the application satisfies the intent, and updating the first neural network comprises providing a positive reward to the first neural network model; or
the determining comprises determining that the network slice selected for use by the application does not satisfy the intent, and updating the first neural network comprises providing a negative reward to the first neural network model.

6. The method of claim 5, wherein the method further comprises sending, to the network node, information indicating whether the network slice selected for use by the application satisfies the intent.

7. The method of any preceding claim, further comprising:
determining one of a plurality of network agents deployed at the network node based on a vocabulary set size of each of the plurality of network agents,
wherein the message is generated based on the vocabulary set size of the determined network agent and sending the generated message comprises sending the generated message to the determined network agent.

8. The method of claim 7, wherein determining the one of the plurality of network agents comprises:
sending, to the network node, information indicating a required vocabulary size for the message; and
receiving, from the network node, an indication of the one of the plurality of network agents.

9. A method performed by a network node, the method comprising:
receiving, from a mobile device, a message for requesting a network slice selection for an application running on the mobile device, the message being based on an intent of the application and being expressed using a second vocabulary set;
selecting, using a second neural network and based on the message, a network slice to assign to the application running on the mobile device;
sending, to the mobile device, information indicating the selected network slice;
determining whether the selected network slice satisfies the intent; and
updating the second neural network based on the result of the determining.

10. The method of claim 9, wherein the intent comprises information defining at least one of:
one or more requirements of the application;
one or more goals of the application; or
one or more constraints of the application.

11. The method of any of claims 9 or 10, wherein:
the determining comprises determining that the network slice selected for use by the application satisfies the intent, and updating the second neural network comprises providing a positive reward to the second neural network model; or
the determining comprises determining that the network slice selected for use by the application does not satisfy the intent, and updating the second neural network comprises providing a negative reward to the second neural network model.

12. The method of claim 11, wherein the determining comprises receiving, from the mobile device, information indicating whether the network slice selected for use by the application satisfies the intent.

13. The method of any of claims 9 to 12, further comprising:
receiving, from the mobile device, information indicating a required vocabulary size for the message;
determining one of a plurality of network agents deployed at the network node based on the information indicating the required vocabulary size and a vocabulary set size of each of the plurality of network agents; and
sending, to the mobile device, an indication of the determined one of the plurality of network agents.

14. An apparatus comprising means for performing the method of any of claims 1 to 13.

15. An apparatus comprising at least one processor and at least one memory storing instructions that, when executed by the at least one processor, cause the apparatus at least to perform the method of any of claims 1 to 13.
